(19) Europäisches Patentamt
European Patent Office
Office européen des brevets

(11) EP 1 094 147 A1

(12) EUROPÄISCHE PATENTANMELDUNG

(43) Veröffentlichungstag:
**25.04.2001 Patentblatt 2001/17**

(51) Int Cl.[7]: **D06M 15/59**, D06M 15/53, C08G 69/40

(21) Anmeldenummer: **99810847.6**

(22) Anmeldetag: **22.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **CLARIANT INTERNATIONAL LTD.
4132 Muttenz (CH)**

(72) Erfinder: **Die Erfindernennung liegt noch nicht vor**

# (54) Erhöhung der Nassgleitfähigkeit von Textilmaterial und Nassgleitmittel dafür

(57) Verwendung von
($P_A$) in Wasser dispergierbaren oder kolloidal löslichen Polyamiden, die hydrophile Polyalkylenglykolätherketten im Grundgerüst enthalten, als Naßgleitmittel beim Behandeln von textiler Stückware in Strang- oder Schlauchform mit einem Textilbehandlungsmittel (T) aus wäßriger Flotte unter solchen Bedingungen, die sonst im textilen Substrat die Bildung von Lauffalten und/oder das Auftreten von Reibungen im oder am Substrat begünstigen würden, besonders als Naßgleitmittel beim Färben von Polyamiden im Jet, die entsprechenden Naßgleitmittel und bestimmte Polyamide sowie deren Herstellung und Präparate davon.

EP 1 094 147 A1

## Beschreibung

Bei der Behandlung von Textilmaterial in Form von textiler Stückware, besonders in Strang- oder Schlauchform, im wesentlichen beim Vorbehandeln, Färben, optischen Aufhellen oder Nachbehandeln, in wäßriger Flotte unter solchen Bedingungen, daß im textilen Substrat Lauffalten entstehen können oder Reibungen vom Substrat gegen benachbartes Substrat oder Apparateteile stattfinden können, sind unerwünschte Erscheinungen die Markierung der Lauffalten und die Entstehung und Markierung von Scheuerstellen, welche dann als entsprechende Unegalitäten das Warenbild und gegebenenfalls auch die physikalischen Eigenschaften der behandelten Ware und folglich der fertigen Ware beeinträchtigen. Um diesen störenden Erscheinungen entgegen zu wirken, werden in den entsprechenden Verfahrensstufen Naßgleitmittel eingesetzt, die die Neigung zur Bildung bzw. Stabilisierung und folglich Markierung von Falten, insbesondere Lauffalten, verringern und die Reibung Substrat/Substrat und Substrat/Metall und folglich die Neigung zur Bildung und Markierung von Scheuerstellen verringern. Es wurde bereits vorgeschlagen, verschiedene Arten von Wachsdispersionen als Lauffaltenverhinderungsmittel (Gleitmittel) einzusetzen. Bei der steten Weiterentwicklung der Verfahren und Maschinen, mit dem Ziel der Leistungserhöhung und umweltgerechten Verfahrensweise, werden Maschinen und Verfahren entwickelt, die für höhere Geschwindigkeiten bzw. höhere Leistungen konzipiert sind und/oder bei kürzeren Flottenverhältnissen arbeiten. Dadurch werden den eingesetzten Gleitmitteln auch höhere Anforderungen gestellt. So müssen sie zum Beispiel besonders hohen Scherkräften gegenüber beständig sein und dabei ihre Wirkung auch bei kurzen Flotten möglichst gut entfalten. Je kürzer die Flotte, desto größer muß die Wirksamkeit der jeweiligen Behandlungsmittel sein, da das Naßgleiten der Ware und das Erzielen eines egalen ruhigen Warenbildes ohne Schädigung der Ware umso mehr erschwert ist, desto größer der Anteil an Flotte ist, der von der Ware aufgenommen wird.

Es wurde nun gefunden, daß bestimmte polyalkylenglykolätherhaltige Polyamide einer bestimmten Hydrophilie, wie sie ausreicht, damit das Polyamid in Wasser dispergierbar oder kolloidal löslich sei, insbesondere selbstdispergierbar oder kolloidal löslich sei, sich überraschend vorteilhaft als Naßgleitmittel bei der Behandlung von Textilmaterial in Form von textiler Stückware, besonders aus Polyamidfasern, in Düsenfärbeapparaten auswirken, wobei sie z.B. die Färbung nicht behindern oder beeinträchtigen, sondern auf dem nassen Substrat überraschend gut und äußerst oberflächlich als Naßgleitmittel wirken.

Die Erfindung betrifft die Verwendung solcher Polyamide, wie unten als ($P_A$) definiert, als Naßgleitmittel für die Behandlung von Textilmaterial in Form von textiler Stückware, die entsprechenden Naßgleitmittel und bestimmte Polyamide sowie deren Herstellung und Präparate davon.

Ein erster Gegenstand der Erfindung ist also die Verwendung von

($P_A$) in Wasser dispergierbaren oder kolloidal löslichen Polyamiden, die hydrophile Polyalkylenglykolätherketten im Grundgerüst enthalten,

als Naßgleitmittel beim Behandeln von textiler Stückware in Strang- oder Schlauchform mit einem Textilbehandlungsmittel (T) aus wäßriger Flotte unter solchen Bedingungen, die sonst im textilen Substrat die Bildung von Lauffalten und/oder das Auftreten von Reibungen im oder am Substrat begünstigen würden.

Als Polyamide ($P_A$) können bekannte Polyamide eingesetzt werden oder auch solche, die analog zu bekannten Polyamiden herstellbar sind. Zur Herstellung der Polyamide ($P_A$) werden vorteilhaft solche Ausgangsprodukte verwendet, die zur Bildung linearer Polyamidketten geeignet sind, insbesondere difunktionelle Verbindungen (D), und gegebenenfalls monofunktionelle Verbindungen (E) die zum Endverschluß der Polyamide geeignet sind, und/oder höhere oligofunktionelle Verbindungen (H) die zur Verzweigung der Polyamide geeignet sind. Die erfindungsgemäß einzusetzenden Polyamide ($P_A$) sind in Wasser dispergierbar (vorzugsweise selbstdispergierbar) oder kolloidal löslich (vorzugsweise selbst kolloidal löslich) und enthalten im jeweiligen Molekül mindestens einen hydrophilen Bestandteil und mindestens einen hydrophoben Bestandteil, so daß das entstehende Polyamid eine entsprechende Hydrophilie aufweist und in Wasser dispergierbar oder kolloidal löslich ist, insbesondere selbstdispergierbar oder selbst kolloidal löslich ist. Als in Wasser selbstdispergierbar oder selbst kolloidal löslich sind solche Produkte gemeint, die ohne Zuhilfenahme von Tensiden fähig sind, durch gelindes Mischen mit Wasser eine Dispersion oder kolloidale Lösung zu bilden. Bei den mono- und oligofunktionellen Verbindungen handelt es sich im wesentlichen um Carbonsäuren oder geeigneten funktionellen Derivaten davon, vornehmlich Halogenide (besonders Bromide, Jodide oder vorzugsweise Chloride) oder cyclische Anhydride, einerseits, und um Amine, insbesondere Diamine, vornehmlich diprimäre Diamine, andererseits, die durch Amidierung zu entsprechenden Carbonsäureamidgruppen führen, oder noch um Aminocarbonsäuren oder Lactame von Aminocarbonsäuren, die durch Polymerisation zu entsprechenden Polyamiden führen. Sie können gegebenenfalls einen oder auch mehrere Substituenten (vorzugsweise mit Ausnahme von solchen, die mit der Polymerisation interferieren können oder die Ionizität des Produktes wesentlich verschieben können, insbesondere von weiteren anionischen oder basischen oder kationischen Gruppen und z.B. von Hydroxy-, Keto-, Ester- und analogen Substituenten), z.B. ätherartige Substituenten wie Methoxy, Äthoxy, Propoxy, Polyäthoxy und Polypropoxy, und/oder heteroatomische Brückenglieder (vorzugsweise mit Ausnahme von solchen, die mit der Polymerisation interferieren können oder die Ionizität des Produktes wesentlich verschieben können, insbesondere von Keto-, Sulfon-,

Ester- und Ammoniumgruppen und basischen Aminogruppen) enthalten z.B. —O—, —CO—NH— oder

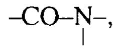,

Als (D) eigenen sich insbesondere

(A) aliphatische, araliphatische oder aromatische Diamine, vorzugsweise solche worin die beiden Aminogruppen primäre und/oder sekundäre Aminogruppen sind, insbesondere

($A_1$) aliphatische, araliphatische oder aromatische Diamine die sonst keine hydrophilen Komponenten oder Substituenten enthalten, insbesondere Alkandiamine mit 2 bis 18 Kohlenstoffatomen, wobei der Alkanrest linear oder verzweigt sein kann, oder, wenn er 6 bis 18 Kohlenstoffatome enthält, auch zyklisch sein kann, und die beiden Aminogruppen in einer Entfernung von mindestens zwei Kohlenstoffatomen voneinander liegen (d.i. $\alpha,\beta$ bis $\alpha,\omega$), Di-($C_{1-2}$-aminoalkyl)-benzole, Piperazin, wasserunlösliche Polyätherdiamine, und araliphatische und aromatische Diamine die einen oder zwei Benzolringe enthalten,
und
($A_2$) aliphatische Diamine, die mindestens eine hydrophile Polyäthylenglykolkette enthalten, vornehmlich wasserlösliche Polyalkylenglykoldiamine worin die Poly-alkylenglykolätherkette Äthylenoxyeinheiten enthält und gegebenenfalls weitere Alkylenoxyeinheiten enthalten kann, aber sonst weiter unsubstituiert sind, insbesondere Propylenoxy und/oder Butylenoxy, und können Homopolymere, Copolymere oder auch Blockpolymere sein, besonders Aminoalkylierungsprodukte solcher Polyalkylenglykole (insbesondere Polyäthylenglykole und Copolyäthylen/propylenglykole), z.B. der durchschnittlichen Formel

$$H_2N—C_nH_{2n}—(O—Alkylen)_m—O—C_nH_{2n}—NH_2 \qquad (I),$$

worin

Alkylen Äthylen oder Propylen,
m eine Zahl von 2 bis 100, vorzugsweise 6 bis 60,

und

n 2 bis 4, vorzugsweise 3,

bedeuten, wobei mindestens 50 Mol-% der m Alkylengruppen Äthylen bedeuten und die restlichen Propylen-1,2 bedeuten,
insbesondere solche der durchschnittlichen Formel

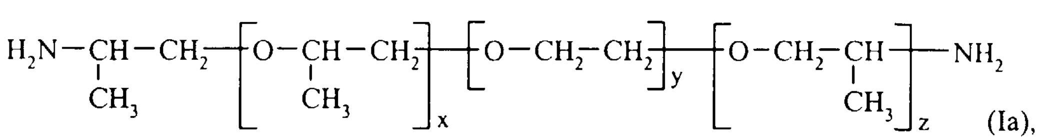

(Ia),

worin

x eine Zahl $\geq 0$,
y eine Zahl $\geq 2$

und

z eine Zahl $\geq 1$

bedeuten,

und die Summe $x + y + z = 3$ bis 100 ist, mit der Maßgabe, daß $y \geq x + z$ ist.

(B) aliphatische, aromatische oder araliphatische Dicarbonsäuren, insbesondere

($B_1$) Aliphatische Dicarbonsäuren mit 2 bis 36 Kohlenstoffatomen (besonders Alkandicarbonsäuren), aromatische Dicarbonsäuren mit einem bis drei Benzolringen, wovon zwei gegebenenfalls kondensiert sein können, oder araliphatische Dicarbonsäuren, die 9 bis 18 Kohlenstoffatome enthalten und dabei einen Benzolring oder zwei gegebenenfalls kondensierte Benzolringe enthalten, wobei aromatische Ringe gegebenenfalls über Sauerstoff an weitere aliphatische, aromatische oder araliphatische Teile des Moleküls gebunden sein können, und

($B_2$) aliphatische oder araliphatische Dicarbonsäuren, die mindestens eine hydrophile Polyäthylenglykolätherkette enthalten,

(C) aliphatische Aminomonocarbonsäuren, insbesondere

($C_1$) aliphatische unsubstituierte Aminocarbonsäuren mit 3 bis 18 Kohlenstoffatomen, gegebenenfalls in Lactamform, oder Vorpolymere (Polyamide) davon.

Als ($A_1$) seien beispielsweise genannt: Polymethylendiamine der Formel

$$H_2N—(CH_2)_p—NH_2 \quad (II),$$

worin

p 4 bis 12 bedeutet,

1,5-Diamino-2-methylpentan, 4,7-Dioxadecamethylendiamin, 1-Amino-3,3,5-trimethyl-5-aminomethylcyclohexan (Isophorondiamin), 1,3-Di-(aminomethyl)-benzol, 1,4-Di-(aminomethyl)-benzol, moder p-Phenylendiamin, Dixylylendiamin, 4,4'-Diaminodiphenyläther, Piperazin, 4,4'-Diamino-dicyclohexylmethan, oder noch Aminopropylierungsprodukte von Polypropylenglykolen (z.B. wie sie unter der Bezeichnung "Jeffamin®" bekannt sind) und aminoterminierte Polycaprolactame aus der Anlagerung von einem monomeren Lactam an ein Alkandiamin (z.B. an eines der obengenannten). Unter den Diaminen ($A_1$) sind die aliphatischen Diamine die sonst keine hydrophilen Komponenten oder Substituenten enthalten, vornehmlich $C_{4-8}$-Alkandiamine, bevorzugt, insbesondere Hexamethylendiamin.

Als ($A_2$) seien beispielsweise genannt: Aminoalkylierungsprodukte von Polyäthylenglykolen (z.B. mit einem durchschnittlichen Molekulargewicht $\overline{M}_W$ im Bereich von 200 bis 4000, vorzugsweise 400 bis 3000), von Copolyalkylenglykolen die vorwiegend aus Äthylenoxyeinheiten und für den restlichen Teil aus Butylenoxy und/oder vorzugsweise Propylenoxyeinheiten bestehen (z.B. solchen mit einem durchschnittlichen Molekulargewicht $\overline{M}_W$ im Bereich von 300 bis 5000, vorzugsweise 500 bis 4000), vorzugsweise von Anlagerungsprodukten von Propylenoxyd an Polyäthylenglykole (z.B. wie sie unter der Bezeichnung "Jeffamin®" bekannt sind). Die Aminoalkylierungsprodukte sind vorteilhaft Aminoäthylierungsprodukte, Aminobutylierungsprodukte oder vorzugsweise Aminopropylierungsprodukte, z.B. solche, wie sie durch Anlagerung von Acrylnitril oder Acrylamid oder vorzugsweise Methacrylnitril oder Methacrylamid und Hydrierung des Produktes zum entsprechenden Diamin oder durch Anlagerung von Äthylenimin, Propylenimin oder Butylenimin erhältlich sind, besonders solche der Formel (Ia). Unter den Diaminen der Formel (Ia) sind diejenigen bevorzugt, in welchen y im Bereich von $2 \cdot (x + z)$ bis $10 \cdot (x + z)$ liegt.

Als ($B_1$) seien beispielsweise genannt: Oxalsäure, Adipinsäure, Bernsteinsäure, Glutarsäure, Pimelinsäure, Suberinsäure (Korksäure), Azelainsäure, Sebacinsäure, Dimethylmalonsäure, 2,2- oder 2,3-Dimethylbemsteinsäure, Diglykolsäure, 3,3'-Oxydipropionsäure, Trimethyladipinsäure, Orthophthalsäure, Isophthalsäure, Terephthalsäure, Oxydibenzoesäure, Naphthalin-2,6-dicarbonsäure, Naphthalin-1,8-dicarbonsäure, Naphthalin-1,4-dicarbonsäure, 1,2-Di-(p-carboxyphenoxy)-äthan, 1,2-Di-(p-carboxyphenyl)-äthan, Biphenyl-2,2'-dicarbonsäure, 1,4-Cyclohexandicarbonsäure und dimerisierte Ölsäure. Unter den aliphatischen Dicarbonsäuren ($B_1$) sind die $\alpha,\omega$-Dicarbonsäuren bevorzugt; unter den aliphatischen, aromatischen und araliphatischen Dicarbonsäuren ($B_1$) sind die aliphatischen, besonders die Alkandicarbonsäuren, bevorzugt besonders solche mit 4 bis 12 Kohlenstoffatomen, vor allem die Adipinsäure.

Als ($B_2$) seien beispielsweise genannt: Polyoxyalkylendicarbonsäuren, z.B. aus der Carboxymethylierung von Polyakylenglykolen oder aus der katalytischen oder elektrochemischen Oxydation der endständigen $CH_2$-OH Gruppen von Polyalkylenglykolen zu COOH Gruppen, wobei die Polyakylenglykole vorzugsweise Polyäthylen glykole und/oder Copolyäthylen/propylen-glykole sind.

Als ($C_1$) seien beispielsweise genannt: Alanin, 4-Aminobuttersäure, 5-Aminovaleriansäure, 6-Aminocapronsäure, 8-Aminocaprylsäure und 12-Aminododecansäure und die entsprechenden Lactame, z.B. $\gamma$-Butyrolactam, $\delta$-

Valerolactam, ε-Caprolactam, γ-Methyl-ε-caprolactam, γ-Äthyl-ε-caprolactam, γ-n-Propyl-ε-caprolactam, γ-Isopropyl-ε-caprolactam, γ-t.Butyl-ε-caprolactam, γ-Cyclohexyl-ε-caprolactam, ε-Methyl-ε-caprolactam, ε-Äthyl-ε-caprolactam, ε-n-Propyl-ε-caprolactam und 8-Caprylolactam, und Vorpolymere davon.

Als monofunktionelle Verbindungen (E) für den Endverschluß der Polyamide eignen sich z.B.

($E_1$) einfache Amine oder Carbonsäuren, die nicht zur Hydrophilie des Polyamids beitragen,
und
($E_2$) Amino- oder Carboxyverbindungen, die zur Hydrophilie der Polyamide beitragen können, besonders solche, die hydrophile Polyalkylenglykolätherketten enthalten.

Als ($E_1$) eigenen sich insbesondere

($E_{11}$) einfache aliphatische oder araliphatische Amine, z.B. Benzylamin, Mono-($C_{8-12}$-alkyl)--amine, Di-($C_{4-6}$-alkyl)-amine und cyclische $C_{9-12}$-Alkylamine,
und ($E_{12}$) einfache aliphatische, araliphatische oder aromatische Monocarbonsäuren, z.B. $C_{6-12}$-alkanoische Säuren und gegebenenfalls alkylsubstituierte Benzoesäuren.

Als ($E_2$) eigenen sich insbesondere

($E_{21}$) aliphatische oder araliphatische Aminoverbindungen, die einen hydrophilen Molekülteil, z.B. eine Polyalkylenglykolätherkette, enthalten,
und ($E_{22}$) aliphatische oder araliphatische carboxygruppenhaltige, hydrophile Verbindungen, die einen hydrophilen Molekülteil, z.B. eine Polyalkylenglykolätherkette, enthalten.

Als($E_{11}$) seien beispielsweise genannt: n-Octylamin, n-laurylamin und Dicyclohexylamin.

Als ($E_{12}$) seien beispielsweise genannt: Benzoesäure, Caprylsäure und Capronsäure.

Als ($E_{21}$) seien beispielsweise genannt: Aminoalkylierungsprodukte von Anlagerungsprodukten von Äthylenoxyd und/oder Propylenoxyd, und gegebenenfalls Butylenoxyd oder Styroloxyd, an einen aliphatischen Monoalkohol mit 1 bis 18 Kohlenstoffatomen oder an ein Alkylphenol mit insgesamt 10 bis 24 Kohlenstoffatomen, wobei vorteilhaft mindestens 50 Mol-% der vorhandenen Alkylenoxygruppen Äthylenoxygruppen sind und die eingebauten Polyalkylenglykolätherketten vorzugsweise solche sind, die vorwiegend aus Äthylenoxyeinheiten und für den restlichen Teil aus Propylenoxyeinheiten bestehen, oder solche die ausschließlich aus Äthylenoxyeinheiten bestehen (z.B. bis zu einem durchschnittlichen Molekulargewicht im Bereich von 200 bis 4000, besonders 400 bis 3000). Darunter sind Aminoalkylierungsprodukte von Anlagerungsprodukten von Äthylenoxyd oder von Äthylenoxyd und Propylenoxyd an ein niedrigmolekulares Alkanol (insbesondere $C_{1-4}$-Alkanol) bevorzugt. Die Aminoalkylierungsprodukte sind z.B. Aminoäthylierungsprodukte, Aminobutylierungsprodukte oder vorzugsweise Aminopropylierungsprodukte, z.B. solche, wie sie durch Anlagerung von Acrylnitril oder Acrylamid oder vorzugsweise Methacrylnitril oder Methacrylamid und Hydrierung des Produktes zum entsprechenden Diamin oder durch Anlagerung von Äthylenimin, Propylenimin oder Butylenimin erhältlich sind (z.B. solche wie sie auch unter der Bezeichnung "Jeffamin®" bekannt sind).

Als ($E_{22}$) seien beispielsweise genannt: Carboxymethylierungsprodukte von Anlagerungsprodukten von Äthylenoxyd und/oder Propylenoxyd an einen aliphatischen Monoalkohol mit 1 bis 18 Kohlenstoffatomen, wobei vorteilhaft mindestens 50 Mol-% der vorhandenen Alkylenoxygruppen Äthylenoxygruppen sind und die eingebauten Polyalkylenglykolätherketten vorzugsweise solche sind, die ausschließlich aus Äthylenoxyeinheiten bestehen, (z.B. bis zu einem durchschnittlichen Molekulargewicht im Bereich von 200 bis 4000), oder Produkte der katalytischen oder elektrochemischen Oxydation der endständigen $-CH_2-OH$ Gruppen solcher Anlagerungsprodukte zu endständigen -COOH Gruppen.

Als (H) eignen sich tri- und höhere oligofunktionelle Verbindungen, die unter Amidbildung zu verzweigten Produkten führen können, insbesondere

($H_1$) Verbindungen die 3 bis 10 aliphatische Aminogruppen enthalten,
und
($H_2$) Verbindungen die 3 oder mehr, z.B. 3 oder 4, Carboxygruppen enthalten,

Als ($H_1$) kommen beispielsweise Oligoalkylenoligoamine z.B. mit 3 bis 6 Aminogruppen und mit 2 bis 5 $C_{2-3}$-Alkylengruppen in Betracht, z.B. Diäthylentriamin, Dipropylentriamin, Triäthylentetramin, Tetraäthylenpentamin und Pentaäthylenhexamin,.

Als Oligocarbonsäuren ($H_2$) können aliphatische, araliphatische oder vorzugsweise aromatische Verbindungen, z.B. mit 6 bis 15 Kohlenstoffatomen, verwendet werden, vorzugsweise Benzoltricarbonsäuren (insbesondere Trimellitsäure, Hemimellitsäure oder Trimesinsäure).

Vorzugsweise werden keine verzweigenden oder vemetzenden Produkte (H) eingesetzt.

Besonders bevorzugt werden auch keine endverschließenden Produkte (E) eingesetzt.

Vorteilhaft haben die Polyamide ($P_A$) weitgehend nicht-ionischen Charakter, wobei allfällige endständige nicht-amidierte basische Aminogruppen und/oder allfällige endständige nicht-amidierte Carboxygruppen in Salzform vorzugsweise im wesentlichen die einzigen sind, die dem Produkt ($P_A$) eine Ionizität verleihen können.

Zur Herstellung der erfindungsgemäß einzusetzenden Polyamide ($P_A$) werden vorteilhaft difunktionelle Verbindungen eingesetzt, insbesondere Diamine (A), welche mit entsprechenden Dicarbonsäuren insbesondere vom Typus (B) oder funktionellen Derivaten davon und gegebenenfalls mit Aminocarbonsäuren vom Typus (C) umgesetzt werden, oder Polymerisationsprodukte von Aminocarbonsäuren (bzw. Lactamen davon) insbesondere vom Typus (C) die gegebenenfalls mit (Poly)amiden aus Diaminen insbesondere vom Typus (A) mit entsprechenden Dicarbonsäuren, insbesondere vom Typus (B), bzw. funktionellen Derivaten davon, oder mit Salzen zwischen (A) und (B) weiterumgesetzt werden. Gewünschtenfalls können monofunktionelle und/oder höhere oligofunktionelle Verbindungen, z.B. vom Typus (E) bzw. (H), eingesetzt werden, um, insbesondere mit (H), verzweigte Polyamide herzustellen, bzw. mit (E) eine Endgruppe (Amino- oder Carboxygruppe) zu verschließen. Die relativen Mengen bzw. Molverhältnisse der jeweiligen Ausgangsverbindungen werden zweckmäßig so gewählt, daß die daraus hergestellten Polyamide die gewünschten Hydrophilieeigenschaften aufweisen, d.h. insbesondere so, daß die Polyamide, neben einem hydrophoben Molekülteil auch einen hydrophilen Molekülteil aufweisen, was insbesondere durch geeignete Wahl entsprechender Ausgangsverbindungen gesteuert werden kann. So werden z.B. mit Diaminen vom Typus ($A_1$) bzw. mit Dicarbonsäuren vom Typus ($B_1$) oder Aminomonocarbonsäuren vom Typus ($C_1$) hydrophobe Molekülteile aufgebaut, während mit Komponenten vom Typus ($A_2$) bzw. ($B_2$) hydrophile Molekülteile eingefügt werden. Auch mit Verbindungen vom Typus ($E_{21}$) und ($E_{22}$) wird zur Hydrophilie der Polyamide beigetragen. Vorzugsweise wird erst das hydrophilere Monomere, vorzugsweise ($A_2$) oder ($B_2$), mit einem hydrophoberen Amidierungsreagens, vorzugsweise mit ($B_1$) bzw. ($A_1$) oder/und ($C_1$), zu einem carboxyterminierten oder aminoterminierten Vorpolymeren (insbesondere zu einem Oligoamid) umgesetzt und dieses wird dann mit einer hydrophoberen Komponente, besonders ($A_1$) bzw. ($B_1$) und gegebenenfalls ($C_1$) weiter umgesetzt. Für die Herstellung der bevorzugten Polyamide ($P_A$) aus ($A_1$), ($A_2$) und ($B_1$) wird vorteilhaft erst ($A_2$) mit ($B_1$) zu einem Vorpolymeren (Oligomeren) umgesetzt und dieses wird dann mit ($A_1$) weiterpolymerisiert.

Die Amidierungsumsetzung kann auf an sich bekannte Weise durchgeführt werden, wobei die jeweiligen gewählten Komponenten (D) und gegebenenfalls (H) und/oder (E), gegebenenfalls auch unter Zusatz geeigneter Katalysatoren und/oder Lösungsmittel, umgesetzt werden, zum Beispiel durch direkte Amidierung bei Temperaturen im Bereich von 150 bis 250°C, vorteilhaft 160 bis 200°C, vorzugsweise 170 bis 190°C, in Abwesenheit von Lösungsmitteln, oder durch Umsetzung der Amine mit Säurechloriden in einem inerten Lösungsmittel (z.B. Dimethylacetamid oder N-Methylpyrrolidon) unter dehydrochlorierenden Bedingungen, z.B. im Temperaturbereich von 0 bis 50°C, vorzugsweise 0 bis 25°C. Die Polyamidierung kann (gegebenenfalls in Gegenwart eines inerten Lösungsmittels oder vorzugsweise in Abwesenheit jeglicher Lösungsmittel) unter reduziertem Druck durchgeführt werden, wonach gewünschtenfalls Wasser zugegeben werden kann, zweckmäßig in einer solchen Menge, daß das Reaktionsgemisch rührbar ist.

Da bei der Amidierung auch eine Viskositätserhöhung stattfindet, die sich besonders beim Abkühlen, vor einer Wasserzugabe oder auch bei Beginn der Wasserzugabe bemerkbar macht, ist es von Vorteil, vor der Wasserzugabe

(F) mindestens einem Fließhilfsmittel

zuzugeben.

Als Fließhilfsmittel (F) kommen dabei solche Hilfsmittel in Betracht, welche die Fließeigenschaften, vor allem die Viskosität, der Reaktionsmasse vor, während und besonders auch nach einer Wasserzugabe so verändern können, daß die Masse gut rührbar ist und bleibt, und - als Rotationsviskosität ausgedrückt - z.B. im Bereich von 50 bis $10^5$ cP, vorzugsweise 100 bis 50000 cP liegt. Bei den Fließhilfsmitteln (F) kann es sich sowohl um Rheologiehilfsmittel handeln als auch um Hilfsmittel, die für thermisch bedingte Viskositätsänderungen eingesetzt werden können, d.h. es können sowohl Produkte sein, die den Schmelzbereich der gesamten Reaktionsmasse erniedrigen, oder auch solche, die eventuellen, durch Temperaturerniedrigung bedingten Viskositätserhöhungen entgegenwirken können. Vorteilhaft sind die Verbindungen (F) solche, die einen Siedepunkt und einen Flammpunkt aufweisen, der höher ist als die Reaktionstemperatur, und die gegenüber der Amidierungsreaktion an sich inert sind und unter den Amidierungsbedingungen mit den Reagenzien im wesentlichen nicht umgesetzt werden. Insbesondere können als (F) bekannte aliphatische Verbindungen eingesetzt werden, welche Alkohole und/oder Äther sein können, wie z.B. Glycerin, Äthylenglykol, Propylenglykol, Butandiol, Hexylenglykol, Dipropylenglykol, Dipropylenglykol-monoalkyläther (z.B. $C_{1-4}$-Alkyläther), Polyäthylenglykole z.B. mit durchschnittlich 2 bis 20, vorzugsweise 3 bis 10 Äthylenoxyeinheiten im Molekül, und deren Monoalkyläther, z.B. $C_{1-4}$-Alkyläther, oder auch tertiäre Amide wie z.B. N-Methylpyrrolidon, worunter Propylenglykol, Butandiol, Hexylenglykol, Dipropylenglykol, Butyldiglykol und vor allem Glycerin bevorzugt sind. Die Fließhilfsmittel (F) werden zweckmäßig in einer wirksamen Menge eingesetzt, um die jeweiligen Viskositätsbereiche zu erreichen, z. B. 2 bis 60 Gew.-%, vorteilhaft 5 bis 50 Gew.-% bezogen auf ($P_A$).

Die Zugabe von Wasser zur Herstellung von Dispersionen oder kolloidalen Lösungen von ($P_A$) erfolgt zweckmäßig bei einem geeigneten Temperaturverlauf, d.h. so daß die Wasserzugabe und die Temperatursenkung - unter Berücksichtigung einer allfälligen Viskositätszunahme -- aufeinander abgestimmt sind, z.B. bei Temperaturen im Bereich von 160°C bis Raumtemperatur, wobei vorteilhaft mindestens ein Teil des Wassers bei 100°C bis 160°C zugegeben wird und eine allfällige weitere Verdünnung mit Wasser dann unterhalb 100°C durchgeführt wird. Vorteilhaft wird soviel Wasser zugegeben, daß eine wäßrige Dispersion oder kolloidale Lösung entsteht und das Gemisch gut rührbar ist, und seine Viskosität z.B. im obengenannten Viskositätsbereich liegt. Beispielsweise wird soviel Wasser zugegeben, daß der gesamte Wassergehalt des wäßrigen Produktes im Bereich von 5 bis 98 Gew.-%, vorzugsweise 10 bis 95 Gew.-% liegt. Nach einer Ausführungsform des Verfahrens kann nach der Amidierung auch nur ein Teil des gesamten Wassers zugegeben werden, soweit das wäßrige Gemisch rührbar ist, z.B. so daß der Wassergehalt im Bereich von 5 bis 50 Gew.-% liegt, und der restliche Teil kann dann nachher, zur Einstellung der gewünschten endgültigen Konzentration zugegeben werden.

Die jeweiligen Molverhältnisse werden vorteilhaft so gewählt, daß kein wesentlicher Überschuß an Amino- oder Carboxyverbindungen insgesamt eingesetzt wird, sondern so daß sie im stöchiometrischen Verhältnis eingesetzt werden, wobei eine Abweichung von bis zu ± 5 Mol-%, vorzugsweise bis zu + 2 Mol-%, toleriert werden kann. Wenn höhere oligofunktionelle Verbindungen vom Typus (H) eingesetzt werden, wird deren Molverhältnis zu den eingesetzten difunktionellen Verbindungen (D) vorteilhaft niedrig gehalten. Insbesondere ist es von Vorteil, die jeweiligen Molverhältnisse so zu wählen, daß keine wesentliche Vernetzung stattfindet, vornehmlich so, daß eine wäßrige Verdünnung des Produktes keine gelartigen, irreversiblen Agglomerate, sondern eine Dipersion oder kolloidale Lösung bildet. Wenn z.B. aus Diaminen ($A_1$) und ($A_2$), Dicarbonsäuren ($B_1$), Polyamin ($H_1$) und gegebenenfalls monofunktioneller Verbindung ($E_{21}$) ausgegangen wird, werden vorteilhaft pro Mol eingeführter Damine [($A_1$) + ($A_2$)] ≤ 1 Moläquivalent, vorzugsweise ≤ 0,5 Moläquivalente ($H_1$) eingesetzt, z.B. 0,002 bis 0,4 Moläquivalente davon. Das Molverhältnis ($E_{21}$)/[($A_1$) + ($A_2$)] liegt dann vorteilhaft im Bereich von 0,0002 bis 1,5, vorzugsweise im Bereich von 0,002 bis 0,4, besonders bevorzugt im Bereich von 0,02 bis 0,2. Als ein Moläquivalent (H) ist ein Mol (H) geteilt durch die Anzahl funktioneller Gruppen gemeint; im Fall der Oligoamine ($H_1$) ist ein Moläquivalent ($H_1$) also ein Mol ($H_1$) geteilt durch die Anzahl seiner acylierbaren Aminogruppen. Durch die Umsetzung mit (H) können verzweigte, bzw. gegebenenfalls auch dendromere Polyamide bzw. Oligoamide ($P_A$) hergestellt werden.

Die Umsetzung wird vorteilhaft so gesteuert, daß das durchschnittliche Molekulargewicht $\overline{M}_W$ der hergestellten Polyamide ≥ 2000 ist, und vornehmlich im Bereich von 3000 bis $10^7$, vorzugsweise im Bereich von 5000 bis $10^6$ liegt, besonders bevorzugt im Bereich von 10000 bis $5 \cdot 10^5$. Nach einer bevorzugten Verfahrensweise wird die Synthese der erfindungsgemäß einzusetzenden Polyamide so geführt, daß der Polymerisationsgrad relativ niedrig gehalten werden kann, insbesondere so, daß Oligoamide entstehen.

Die im Polyamid ($P_A$) gegebenenfalls vorhandenen restlichen Carboxygruppen können in Form der freien Säure vorliegen und gewünschtenfalls durch Umsetzung mit entsprechenden Basen in eine Salzform übergeführt werden, wobei zur Salzbildung an sich bekannte Kationen, vorzugsweise hydrophilisierende Kationen, in Betracht kommen, z.B. Alkalimetallkationen (z.B. Lithium, Natrium, Kalium) oder Ammoniumkationen {z.B. unsubstituiertes Ammonium, Mono-, Di- oder Tri--($C_{1-2}$-alkyl)-ammonium, Mono-, Di- oder Tri-($C_{2-3}$-hydroxyalkyl)-ammonium, Mono-, Di- oder Tri--[($C_{1-2}$-alkoxy)-($C_{2-3}$-alkyl)]-ammonium oder Morpholinium}, wofür z.B. entsprechende Alkalimetallhydroxyde oder -carbonate, Ammoniak oder die jeweiligen Amine, vorzugsweise in Form von wäßrigen Lösungen, eingesetzt werden können. Analog können im Polyamid ($P_A$) gegebenenfalls vorhandene restliche Aminogruppen in Form der freien Base vorliegen oder gewünschtenfalls durch Umsetzung mit einer Säure (z.B. einer einwertigen Mineralsäure, insbesondere Salzsäure, oder vorzugsweise einer niedrigmolekularer aliphatischer Carbonsäure vorzugsweise mit 1 bis 4 Kohlenstoffatomen, z.B. Ameisensäure, Essigsäure oder Milchsäure) in die entsprechende protonierte Form übergeführt werden.

Die Hydrophilie der Produkte wird so gesteuert, daß die hergestellten Polyamide ($P_A$) in Wasser dispergierbar bis kolloidal löslich (vorzugsweise in Wasser selbstdispergierbar bis kolloidal löslich) sind, d.h. daß sie in einer Konzentration von 0,1 bis 30 Gew.-%, gegebenenfalls unter Zuhilfenahme geeigneter Dispergatoren in einer Menge von bis zu 50 Gew.-% bezogen auf ($P_A$) und gegebenenfalls Heizen, in Wasser eine entsprechende 0,1 bis 30-%-ige ($P_A$)-Dispersion oder kolloidale Lösung ergeben oder, für die selbstdispergierbaren bis kolloidal löslichen, auch ohne Zuhilfenahme von Dispergatoren, mit Wasser durch einfaches Rühren und gegebenenfalls Heizen und/oder Kühlen eine wäßrige, 0,1 bis 30-%-ige ($P_A$)-Dispersion oder eine wäßrige, 0,1 bis 30-%-ige kolloidale ($P_A$)-Lösung ergeben. Eine solche Dispersion oder kolloidale Lösung kann trübe oder auch durchscheinend bis durchsichtig sein, kann aber im letzteren Fall noch durch Tyndalleffekt erkannt werden.

In Polyamiden bzw. Oligoamiden ($P_A$) welche aus Adipinsäure [als (B)], Hexamethylendiamin (DA) [als ($A_1$)] und Jeffamin ED 900 oder 2000 [als ($A_2$)], kann die Hydrophilie z.B. auch anhand des Gewichtsverhältnisses (DA)/(J) geschätzt werden, wobei (DA) den Gewichtsanteil an amidiertem llexamethylendiamin bedeutet und (J) den Gewichtsanteil an gesamtem amidiertem Jeffamin ED 900 oder 2000 bedeutet. Dieses Gewichtsverhältnis (DA)/(J) liegt für die entsprechenden Polyamide ($P_A$) vorteilhaft im Bereich von 1:3 bis 1:60, vorzugsweise 1:5 bis 1:30. Diese Werte gelten

für die speziellen Polyamide aus den genannten Ausgangskomponenten; wenn andere und/oder weitere Komponenten zur Herstellung der Polyamide ($P_A$) verwendet werden, sind die Werte entsprechend anzupassen bzw. zu ändern, um zur entsprechenden Hydrophilie zu gelangen.

Unter den Polyamiden ($P_A$) sind die Polyamide ($P_A$') bevorzugt, d.h. diejenigen welche in Wasser selbstdispergierbar oder selbst kolloidal löslich sind, darunter besonders die Polyamide ($P_A$''), d.h. diejenigen welche weder (H) noch (E) enthalten, vor allem diejenigen aus der Amidierung von ($B_1$) mit ($A_1$) und ($A_2$).

Die hergestellten Polyamide ($P_A$), welche gegebenenfalls auch (F) beigemischt enthalten, können in Form der wäßrigen Präparate, so wie sie hergestellt worden sind, direkt gehandhabt werden bzw. verwendet werden. Vorteilhaft werden sie in Form von wäßrigen, vorzugsweise konzentrierten Präparaten (W) verwendet. Diese wäßrigen Präparate (W) sind Dispersionen oder kolloidale Lösungen von ($P_A$) und enthalten die Polyamide ($P_A$) vorteilhaft in einer Konzentration im Bereich von 1 bis 50 Gew.-%, vorzugsweise 2 bis 40 Gew.-%, besonders bevorzugt 3 bis 25 Gew.-%. Die wäßrigen Präparate (W) können einfache wäßrige Dispersionen oder kolloidale Lösungen nur von ($P_A$) sein, oder vorzugsweise weitere Zusätze enthalten, insbesondere (F) und/oder

(G) ein Verdickungsmittel.

Als Verdickungsmittel (G) kommen an sich bekannte, vorzugsweise nicht-ionogene und/oder anionische Substanzen in Betracht, insbesondere natürliche, modifizierte oder vorzugsweise synthetische Polymere. Als Verdickungsmittel (G) können beispielsweise (Co)poly(meth)acrylsäuren und/oder -amide, eingesetzt werden, z.B. Copoly(meth)acrylsäuren/(meth)acrylamide und gegebenenfalls teilverseifte Poly(meth)acrylamide und Methylolierungsprodukte davon. Der Gehalt an (Meth)acrylsäureeinheiten ist z.B. $\leq 50$ Mol-%, vorzugsweise $\leq 36$ Mol-%; wenn (Meth)acrylsäureeinheiten im Polymeren enthalten sind, liegt deren Gehalt vorteilhaft im Bereich von 2 bis 50 Mol-%, vorzugsweise 5 bis 36 Mol-%, besonders bevorzugt 10 bis 24 Mol-%. Das durchschnittliche Molekulargewicht kann in den an sich üblichen Bereichen liegen, z.B. im Bereich von $2 \cdot 10^5$ bis $5 \cdot 10^7$, vorzugsweise $5 \cdot 10^5$ bis $4 \cdot 10^7$. Darunter sind Homopolyacrylamide, Copolyacrylamid/acrylsäuren und teilverseifte Polyacrylamide besonders bevorzugt. Die Säuregruppen, besonders die Carbonsäuregruppen, liegen vorteilhaft mindestens z.T. in Form von Salzen vor, z.B. als Alkalimetallsalze (vornehmlich Natriumsalze) oder/und Ammoniumsalze . Die Amidgruppen können gegebenenfalls - z.B. durch Umsetzung mit Formaldehyd oder einer formaldehydabgebenden Verbindung - mindestens teilweise methyloliert sein, z.B. zu 1 bis 100 %, vorzugsweise 2 bis 80 %, besonders 5 bis 60 % aller $CONH_2$-Gruppen im Polymeren. Sie können als Trockensubstanz (z.B. wie im Handel erhältlich) eingesetzt werden. Wenn Verdickungsmittel (G) eingesetzt werden, werden sie vorteilhaft in solchen Mengen eingesetzt, daß die Viskosität der wäßrigen konzentrierten Dispersionen (W) $< 5000$ mPa·s ist, insbesondere bei Werten $\leq 1000$ mPa·s, vorzugsweise im Bereich von 50 bis 1000 mPa·s, zu liegen kommt. Die Konzentration an Verdickungsmittel (G) in (W) ist vorteilhaft niedrig, insbesondere niedriger als diejenige von ($P_A$), und beträgt, berechnet als Trockensubstanz, z.B. $\leq 5$ Gew.-%, vorteilhaft 0 bis 4 Gew.-%, vorzugsweise 0,01 bis 2 Gew.-%.

Gewünschtenfalls können in den wäßrigen Präparaten (W), zusätzlich zu ($P_A$) und gegebenenfalls (F) und/oder (G), weitere Zusätze vorhanden sein, insbesondere eine oder mehrere der folgenden Komponenten:

(X) einen nicht-ionogenen Emulgator oder ein Gemisch aus nicht-ionogenen Emulgatoren oder ein Gemisch aus nicht-ionogenen Emulgatoren und anionischen oder amphoteren Emulgatoren oder ein Gemisch aus nicht-ionogenen Emulgatoren, anionischen Emulgatoren und amphoteren Emulgatoren,
(Y) mindestens ein Mittel zur pH-Einstellung
und
(Z) mindestens ein Formulierungszusatz,

Als Emulgatoren in (X) kommen vornehmlich die folgenden in Betracht:

($X_1$) ein nicht-ionogener Emulgator oder ein Gemisch nicht-ionogener Emulgatoren, mit HLB $\geq 7$,
und, als Beimischungen zu ($X_1$):
($X_2$) mindestens ein anionaktiver Emulgator, welcher eine Carbonsäure oder Sulfonsäure oder ein Schwefelsäure- oder Phosphorsäureteilester oder ein Salz davon ist, oder ein Gemisch solcher anionaktiver Tenside, mit HLB $\geq 7$,
und/oder
($X_3$) mindestens ein amphoterer Emulgator, welcher vorzugsweise eine Aminocarbon- oder -sulfonsäure oder ein entsprechendes quaternäres Ammoniumderivat ist.

Als Emulgatoren ($X_1$) kommen im allgemeinen bekannte Verbindungen in Betracht. Emulgatoren mit nicht-ionogenem Charakter sind in der Technik zahlreich bekannt und auch in der Fachliteratur beschrieben, z.B. in M.J. SCHICK "Non-ionic Surfactants" (Band 1 von "Surfactant Science Series", Marcel DEKKER Inc., New-York, 1967). Geeignete nicht-ionogene Emulgatoren ($X_1$) sind vornehmlich Oxalkylierungsprodukte von Fettalkoholen, Fettsäuren, Fettsäure-mono- oder -dialkanolamiden (worin "alkanol" besonders für "äthanol" oder "isopropanol" steht) oder Fettsäurepartialestem von tri-bis hexafunktionellen aliphatischen Polyolen oder noch Interoxalkylicrungsprodukte von Fettsäureestern (z.B. von natürlichen Triglyceriden), wobei als Oxalkylierungsmittel $C_{2-4}$-Alkylenoxyde und gegebenenfalls Styroloxyd in Betracht kommen und vorzugsweise mindestens 50 % der eingeführten Oxyakyleneinheiten Oxäthyleneinheiten sind; vorteilhaft sind mindestens 80 % der eingeführten Oxyalkyleneinheiten Oxäthyleneinheiten; besonders bevorzugt sind alle eingeführten Oxyalkyleneinheiten Oxäthyleneinheiten. Die Ausgangsprodukte für die Anlagerung der Oxalkyleneinheiten (Fettsäuren, Fettsäure-mono- oder -dialkanolamide, Fettalkohole, Fettsäureester oder Fettsäurepolyolpartialester) können beliebige übliche Produkte sein, wie sie zur Herstellung solcher Tenside verwendet werden, vornehmlich solche mit 9 bis 24, vorzugsweise 11 bis 22, besonders bevorzugt 16 bis 22 Kohlenstoffatomen im Fettrest. Die Fettreste können ungesättigt oder gesättigt, verzweigt oder linear sein; es seien beispielsweise folgende Fettsäuren genannt: Laurinsäure, Myristinsäure, Palmitinsäure, Stearinsäure, Ölsäure, Arachidinsäure und Behensäure sowie technische Fettsäuren, z.B. Talgfettsäure, Kokosfettsäure, technische Ölsäure, Tallöl-fettsäure und technische Sojaölsäure, und deren Hydrierungs- und/oder Destillationsprodukte; als Fettsäure-mono- oder -dialkanolamide können beispielsweise die Mono- oder Di-äthanol- oder -isopropanolamide der genannten Säuren erwähnt werden; als Fettalkohole können die Derivate der jeweiligen genannten Fettsäuren sowie Synthesealkohole, z.B. aus der Oxosynthese, aus dem Zieglerverfahren und/oder aus dem Guerbet-Verfahren [z.B. Isotridecanole, Alfoltypen (z. B. Alfol 10, 12 oder 14) und 2-Butyloctanol], erwähnt werden. Als Partialester der genannten Polyole seien beispielsweise die Mono- oder Difettsäureester von Glycerin, Erythrit, Sorbit oder Sorbitan erwähnt, insbesondere die Sorbitanmono- oder -di-oleate oder -stearate. Von den genannten Produkten sind die oxalkylierten Fettalkohole bevorzugt, vor allem die Oxäthylierungsprodukte von linearen Fettalkoholen, insbesondere diejenigen der folgenden durchschnittlichen Formel

$$R_1—O—(CH_2—CH_2—O)_p—H \qquad (III),$$

worin

$R_1$ einen aliphatischen, linearen Kohlenwasserstoffrest mit 9 bis 22 Kohlenstoffatomen

und

p 4 bis 40

bedeuten, oder Gemische solcher Tenside.

Der HLB-Wert der Tenside ($X_1$) liegt vorteilhaft im Bereich von 7 bis 20, vorzugsweise im Bereich von 8 bis 16. Von den Verbindungen der Formel (III) sind besonders diejenigen bevorzugt, worin $R_1$ 11 bis 18 Kohlenstoffatome enthält.

Als anionaktive Tenside ($X_2$) kommen im allgemeinen an sich bekannte Säuren (bzw. Salze davon) mit Emulgatorcharakter in Betracht, wie sie an sich als Dispergatoren, z.B. als Emulgatoren oder als Waschmittel, üblicherweise Verwendung finden. Solche tensiden anionischen Verbindungen sind in der Technik bekannt und in der Fachliteratur zahlreich beschrieben, z.B. in W.M. LINFIELD "Anionic Surfactants" (Band 7 von "Surfactant Science Series", Marcel DEKKER Inc., New-York, 1976). Insbesondere kommen solche anionaktiven Tenside in Betracht, die einen lipophilen Rest enthalten (insbesondere den Rest einer Fettsäure oder einen aliphatischen Kohlenwasserstoffrest eines Fettalkohols) der beispielsweise 8 bis 24 Kohlenstoffatome, vorteilhaft 10 bis 22 Kohlenstoffatome, insbesondere 12 bis 18 Kohlenstoffatome enthält und aliphatisch oder araliphatisch sein kann und wobei die aliphatischen Reste linear oder verzweigt, gesättigt oder ungesättigt sein können. Vorzugsweise sind bei Carbonsäuren die lipophilen Reste rein aliphatisch, während bei Sulfonsäuren die lipophilen Reste vorzugsweise gesättigte rein aliphatische oder araliphatische Reste sind. Die Einführung von Carboxygruppen kann z.B. durch Oxydation von $-CH_2-OH$ Gruppen oder Carboxyalkylierung von Hydroxygruppen erfolgen, z.B. in den obengenannten nicht-ionogenen tensiden Oxalkylierungsprodukten, wobei zur Oxalkylierung Oxirane verwendet werden können, vornehmlich Äthylenoxyd, Propylenoxyd oder/und Butylenoxyd und gegebenenfalls Styroloxyd, und vorzugsweise mindestens 50 Mol-% der eingesetzten Oxirane Äthylenoxyd ist; beispielweise sind dies Anlagerungsprodukte von 1 bis 12 Mol Oxiran an 1 Mol Hydroxyverbindungen. Zur Carboxyalkylierung werden vornehmlich Halogenalkancarbonsäuren eingesetzt, vorteilhaft solche, worin der Halogenalkylrest 1 bis 4 Kohlenstoffatome, vorzugsweise 1 oder 2 Kohlenstoffatome, enthält, Halogen vornehmlich für Chlor oder Brom steht und die Säuregruppe gegebenenfalls in Salzform vorliegen kann. Eine Phosphorsäure- oder Schwefelsäurepartialestergruppe kann z.B. auch durch Monoveresterung mit Phosphorsäure oder Schwefelsäure eingeführt werden, z.B. durch Umsetzung einer Hydroxyverbindung mit Phosphorsäure- oder Schwefelsäureanhydrid. Als Sulfonsäuren kommen im wesentlichen Sulfonierungsprodukte von Paraffinen (z.B. hergestellt durch Sulfochlorierung

oder Sulfoxydation), von α-Olefinen, von Alkylbenzolen und von ungesättigten Fettsäuren oder auch Formaldehydkondensate von sulfonierten Aromaten (z.B. von sulfoniertem Naphthalin) in Betracht. Die anionaktiven Tenside werden vorteilhaft in Form von Salzen eingesetzt, wobei zur Salzbildung vorzugsweise hydrophilisierende Kationen in Betracht kommen, insbesondere Alkalimetallkationen (z.B. Lithium, Natrium, Kalium) oder Ammoniumkationen [z.B. die obengenannten] oder auch Erdalkalimetallkationen (z.B. Calcium oder Magnesium). Unter den genannten anionaktiven Tensiden ($X_2$) sind die estergruppenfreien bevorzugt, vornehmlich Seifen, insbesondere Aminseifen, sowie die Carboxymethylierungsprodukte oxäthylierter Fettalkohole und die Sulfonsäuren, vorzugsweise in Salzform wie oben genannt, besonders als Alkalimetallsalze.

Als amphotere Tenside ($X_3$) kommen im allgemeinen an sich bekannte Ampholyten mit Emulgatorcharakter in Betracht, wie sie an sich als Dispergatoren, z.B. als Emulgatoren einsetzbar sind. Emulgatoren mit amphoterem Charakter sind in der Technik auch zahlreich bekannt und auch in der Fachliteratur beschrieben, z.B. in B.R. BLUESTEIN and Clifford L. HILTON "Amphoteric Surfactants" (Band XII von "Surfactant Science Series", Marcel DEKKER Inc., New-York, 1982). Insbesondere kommen solche amphoteren Tenside in Betracht, die einen lipophilen Rest enthalten (insbesondere den Rest einer Fettsäure oder einen aliphatischen Kohlenwasserstoffrest eines Fettamins) der beispielsweise 8 bis 24 Kohlenstoffatome, vorteilhaft 10 bis 22 Kohlenstoffatome, insbesondere 12 bis 18 Kohlenstoffatome enthält und aliphatisch oder araliphatisch sein kann und wobei die aliphatischen Reste linear oder verzweigt, gesättigt oder ungesättigt sein können, und mindestens eine anionische Gruppe, z.B. wie oben bei den anionaktiven Emulgatoren genannt, sowie mindestens eine kationische Gruppe oder mindestens eine basische protonierbare Gruppe, vornehmlich eine Ammoniumgruppe oder eine basische Aminogruppe im Molekül kovalent gebunden enthalten. Es seien beispielsweise genannt: Carboxybetaine und Sulfobetaine, Fettaminopropionsäuren, Carboxymethylierungsprodukte oder Sulfomethylierungsprodukte oder 3-Sulfo-2-hydroxypropylierungsprodukte von Fettaminen oder von Anlagerungsprodukten von Oxiranen, (vorzugsweise Äthylenoxyd) an Fettaminen, und 3-Sulfo-2--hydroxypropylierungsprodukte von Fettsäure-N-[2-(β-hydroxyäthylamino)-äthyl]-amiden.

Die Tenside (X) werden zweckmäßig in solchen Mengen eingesetzt, die ausreichen, damit ($P_A$) und gegebenenfalls (G) in der wäßrigen Phase gut dispergiert werden können und eine besonders stabile wäßrige Dispersion von ($P_A$) und (G) - die gegebenenfalls auch (F) enthält - entstehen kann.

Die eingesetzte Menge an (X) ist vorteilhaft ≤ 80 Gew.-% von ($P_A$), vorzugsweise ≤ 50 Gew.-% von ($P_A$), besonders bevorzugt 0 bis 30 Gew.-% von ($P_A$). Wenn ($P_A$) selbstdispergierbar bis kolloidal löslich [vorzugsweise ($P_A'$)] ist, ist (X) nicht nötig. Vorzugsweise wird kein Tensid (X) eingesetzt.

Als (Y) eigenen sich beliebige, an sich bekannte Verbindungen, wie sie für die Einstellung des pH-Wertes von Textilbehandlungsmitteln üblicherweise verwendet werden, zum Beispiel die oben genannten Basen, oder auch Puffersalze wie z.B. Natriumacetat oder Mono- oder Dinatriumphosphat, oder gelegentlich auch Säuren (z.B. eine einwertige Mineralsäure, insbesondere Salzsäure, oder vorzugsweise eine niedrigmolekulare aliphatische Carbonsäure vorzugsweise mit 1 bis 4 Kohlenstoffatomen, z.B. Ameisensäure, Essigsäure oder Milchsäure), z.B. um überschüssige Base auszugleichen.

Der pH der Dispersionen (W) kann weit schwanken und gegebenenfalls durch Zugabe von (Y) eingestellt werden; vorzugsweise liegt er im Bereich von 5 bis 9, besonders bevorzugt 6 bis 8.

Gegebenenfalls können die Dispersionen (W) zusätzlich mindestens einen Formulierungszusatz (Z) enthalten, insbesondere ($Z_1$) ein bakterienwachstumhemmendes Mittel oder ein Mikrobicid, oder ($Z_2$) ein Reduktionsmittel oder ein Bleichmittel. Als ($Z_1$) kommen vor allem Fungicide und Bakterizide in Betracht, z.B. käufliche Produkte, die in den jeweils empfohlenen Konzentrationen eingesetzt werden können. Als ($Z_2$) können übliche Reduktionsmittel oder Bleichmittel eingesetzt werden, besonders reduktive Bleichmittel wie z.B. Natriumbisulfit. Geeignete Konzentrationen an (Z) sind z.B. im Bereich von 0 bis 4 Gew.-%, vorzugsweise 0,0001 bis 2 Gew.-%, besonders bevorzugt 0,001 bis 1 Gew.-% bezogen auf (W).

Besonders erwähnenswert sind die Dispersionen (W'), die im wesentlichen aus ($P_A$) und Wasser und gegebenenfalls einem oder mehreren der Zusätze (F), (G), (X), (Y) und/oder (Z) bestehen [z.B. aus ($P_A$) und Wasser und gegebenenfalls einem oder mehrere der Zusätze (F), (G), (X), (Y) und/oder (Z)], besonders die Dispersionen (W''), die im wesentlichen aus ($P_A'$) und Wasser und vorzugsweise (F) und/oder (G) und zusätzlich gegebenenfalls einem oder mehreren der Zusätze (Y) und/oder (Z) bestehen, besonders aus ($P_A''$) oder ($P_A'''$) und Wasser und vorzugsweise (F) und/oder (G) und gegebenenfalls einem oder mehreren der Zusätze ($Z_1$), ($Z_2$) und/oder (Y).

Vorzugsweise werden Verdickungsmittel (G) eingesetzt, welche Polyacrylamide und/oder Acrylamid/Acrylsäure-Copolymere gegebenenfalls in Salzform sind, die gegebenenfalls mit Formaldehyd mindestens teilweise methyloliert sind.

Die (F)- und gegebenenfalls (G)-haltigen Dispersionen und/oder kolloidale Lösungen (W), insbesondere (W') und vorzugsweise (W''), können durch geeignetes Mischen der Komponenten hergestellt werden, insbesondere dadurch, daß man ($P_A$), z.B. als Schmelze mit (F) mischt, Wasser zugibt und, in Gegenwart von Wasser, gegebenenfalls mit (G) und/oder (X) nacheinander in beliebiger Reihenfolge mischt und gegebenenfalls weitere Zusätze, besonders mindestens einen der Zusätze (X), (Y) und/oder (Z), zugibt. Wenn (X) zugegeben wird, kann es gewünschtenfalls auch

direkt der Schmelze beigemischt werden. Die erfindungsgemäßen Dispersionen und/oder kolloidale Lösungen (W), können insbesondere dadurch hergestellt werden, daß man ($P_A$), gegebenenfalls im Gemisch mit (F) und/oder (X), mit Wasser und gegebenenfalls mit (Z) mischt und gegebenenfalls mit einer wäßrigen Lösung oder Dispersion von (G) und gegebenenfalls mit wäßrigem (X) und/oder (Y) und/oder weiterem (Z) mischt. Eine allfällige Methylolierung von Polyacrylamiden und/oder Acrylamid/Acrylsäure-Copolymeren kann durch einfaches Beimischen der erforderlichen Menge Formaldehyd oder der formaldehydabgebenden Verbindung (z.B. Paraformaldehyd) in die wäßrige Lösung des Polyacrylamids und/oder Acrylamid/Acrylsäure-Copolymeren im obengenannten pH-Bereich bei Temperaturen z.B. von 10 bis 40°C erfolgen.

Nach einer besonderen Ausführungsform der Erfindung werden Verdickungsmittels (G) eingesetzt, welche Polyacrylamide und/oder Acrylamid/Acrylsäure-Copolymere gegebenenfalls in Salzform sind, die mit Formaldehyd mindestens teilweise methyloliert sind.

Nach einer anderen Ausführungsform der Erfindung, kann auch gar kein Verdickungsmittel (G) eingesetzt werden.

Die oben beschriebenen Polyamide ($P_A$), vorzugsweise in Form von wäßrigen Dispersionen (W), finden ihren Einsatz als Naßgleitmittel, d.h. als Hilfsmittel beim Behandeln von textilen Flächengebilden mit Behandlungsmitteln (T) (z.B. Vorbehandeln, Färben, optischen Aufhellen oder Nachbehandeln) unter solchen Bedingungen, unter welchen an sich sonst Lauffalten entstehen können oder Reibungen im oder am Substrat stattfinden können, wobei die erfindungsgemäß einzusetzenden Dispersionen (W) besonders zur Verhinderung der Stabilisierung und Markierung der im Laufe der Behandlung entstehenden Falten und zur Verhinderung von schädlichen Reibungen dienen. Bei solchen Verfahren handelt es sich im wesentlichen um Ausziehverfahren aus kurzer Flotte (Gewichtsverhältnis Flotte/-Substrat z.B. im Bereich von 3:1 bis 40:1, meistens 4:1 bis 20:1) unter den an sich üblichen Behandlungsbedingungen und -zeiten (z.B. im Bereich von 20 Minuten bis 12 Stunden).

Die Dispersionen (W), bzw. die Polyamide ($P_A$), auch in Gegenwart von (G), weisen ein optimales Naßgleitverhalten auf, sodaß bei deren Verwendung eine wirksame Verteilung auf der Oberfläche des nassen Stoffes möglich ist, wonach sie im allgemeinen durch Ablassen der Flotte wieder ausgeschieden werden können oder/und durch die verfahrensbedingten Wasch- und/oder Spülgänge eliminiert werden können.

Die Behandlungsmittel (T) sind im allgemeinen Textilchemikalien (insbesondere Textilveredlungschemikalien), die nach der jeweiligen Behandlung des Substrates, für den Teil der auf dem Substrat nicht fixiert ist, vom Substrat wieder entfernt werden können, z.B. durch Waschen oder/und Spülen.

Als (T) kommen insbesondere die folgenden Untergruppen in Betracht:

($T_1$) Vorbehandlungsmittel (hauptsächlich Netzmittel, Waschmittel, Bleichmittel, Enzyme, Sequestriermittel und Alkalien und gegebenenfalls entsprechende Hilfsmittel, wie sie in der Vorbehandlung zum Entschlichten, Abkochen, Bleichen, Enzymbehandeln und sonstigen Reinigen verwendet werden können),
($T_2$) Hauptbehandlungsmittel (hauptsächlich Netzmittel, Farbstoffe, Färbehilfsmittel und optische Aufheller), und
($T_3$) Nachbehandlungsmittel (hauptsächlich Fixiermittel, Ausrüstungsmittel, Reinigungsmittel und Reduktionsmittel);

wobei die jeweiligen Behandlungen in wäßrigem Medium durchgeführt werden.

Als Verfahren in welchen Lauffalten im textilen Substrat entstehen können, sind im wesentlichen solche gemeint, in welchen das nasse Substrat durch Einwirkung und gegebenenfalls Interferenz verschiedener Kräfte dazu neigt, sich in Falten zu legen. Die Falten, die in solchen Verfahren entstehen, können an sich durch Stabilisierung im Laufe des Behandlungsverfahrens zur Markierung der Knickstellen führen, was zu den eingangs genannten Nachteilen führen kann. In solchen Verfahren dienen die Polyamide ($P_A$) bzw. die Dispersionen (W) als Naßgleitmittel, insbesondere als Lauffaltenverhinderungsmittel, u.zw. insoweit als sie ein Gleiten des nassen Stoffes bzw. der nassen Falten begünstigen bzw. ermöglichen und somit eine schädliche Stabilisierung der Lauffalten verhindern können. Als lauffaltenverursachende Behandlungsverfahren kommen vornehmlich Behandlungen auf einem Haspel (insbesondere in einer Haspelkufe) oder vor allem in Düsenfärbeapparaten (jet-dyeing machines) in Betracht, worin das Substrat in jedem Zyklus über den Haspel bzw. durch die Düse geführt wird, an welcher Stelle die Faltenbildung oder/und die auf die Falten einwirkenden Kräfte, die zur Stabilisierung der Falten führen können, am stärksten sind.

Als Verfahren, in welchen Reibungen im oder am textilen Substrat stattfinden können, sind im wesentlichen solche gemeint, in welchen das nasse Substrat durch hohe Laufgeschwindigkeit, Führung durch Düsen oder/und Änderung der Laufrichtung oder/und -geschwindigkeit gegen Apparateteile oder benachbarte Substratteile reibt. Die Scheuerstellen, die in solchen Verfahren entstehen, können im Laufe des Behandlungsverfahrens zur Markierung derselben und zur Beeinträchtigung der physikalischen Eigenschaften des Substrates führen. In solchen Verfahren dienen die Polyamide ($P_A$) bzw. die Dispersionen (W) als Naßgleitmittel, insoweit als sie ein Gleiten des nassen Stoffes (besonders auf benachbartem Stoff oder auf Metall) begünstigen bzw. ermöglichen und somit eine schädliche Reibung

des Substrates verhindern können. Als scheuerstellenverursachende Behandlungsverfahren kommen vornehmlich Behandlungen in Düsenfärbeapparaten (jet-dyeing machines) in Betracht, worin das Substrat in jedem Zyklus durch die Düse geführt wird, an welcher Stelle die relative Beschleunigung oder/und die auf das Substrat einwirkenden Kräfte am stärksten sind, und worin das Substrat in jedem Zyklus von der eigenen Lage in der Flotte zur Düse gezerrt wird, so daß an den jeweiligen Stellen die Substrat-gegen-Substrat Beschleunigung bzw. Substrat-gegen-Metall Beschleunigung stellenweise Reibungen verursachen kann, die zu den genannten Scheuerstellen führen können.

Als Substrate für das erfindungsgemäße Verfahren und für die erfindungsgemäßen Naßgleitmittel eignen sich im allgemeinen beliebige Substrate, wie sie in den genannten Verfahren eingesetzt werden können, vornehmlich solche die Synthesefasern, vor allem Polyamidfasern, gegebenenfalls im Gemisch mit anderen Fasern, insbesondere mit anderen Synthesefasern (z.B. Acrylfasern oder Polyurethanfasern) oder gegebenenfalls modifizierten natürlichen Fasern, z.B. aus Wolle, Seide oder gegebenenfalls modifizierter Cellulose (z.B. Baumwolle, Leinen, Jute, Hanf, Ramier, Viskoserayon oder Celluloseacetate) enthalten, wobei als Fasergemische z.B. Polyamid/Baumwolle, Polyamid/Polyacryl, Polyamid/Wolle, Polyamid/Polyurethan und Polyamid/ Baumwolle/Polyurethan erwähnt werden können. Das textile Substrat kann in einer beliebigen Form als Stückware eingesetzt werden, wie sie in den genannten Verfahren behandelt werden kann, z.B. als Schlauchware, als offene Textilbahnen oder auch als Halbfertigware, im wesentlichen in Strangform oder Schlauchform, wie sie für Haspel oder vor allem Jet geeignet ist; es können sowohl Maschenware als auch Gewebe eingesetzt werden (z.B. feine bis grobe einfache Maschenware oder auch Interlock, feine bis grobe Gewebe, Frotté-Ware, Samt und durchbrochene oder/und maschinenbestickte Textilien), insbesondere auch Ware aus Mikrofasern, vornehmlich Polyamidmikrofasern und Gemischen davon mit anderen entsprechend feinen Fasern, z.B. Seide, Wolle und/oder Baumwolle.

Die erfindungsgemäßen Naßgleitmittel, d.h. Polyamide ($P_A$) bzw. Dispersionen (W), werden zweckmäßig in solchen Konzentrationen eingesetzt, daß im jeweiligen Verfahren eine wirksame Verhinderung der Faltenmarkierung und Scheuerstellenbildung erfolgt. Sie zeichnen sich durch ihre Wirksamkeit und Ausgiebigkeit aus und können in sehr niedrigen Konzentrationen eine sehr hohe Wirkung zeigen; vorteilhaft werden sie in solchen Konzentrationen eingesetzt, die 0,005 bis 2 g ($P_A$) pro Liter Flotte, vorzugsweise 0,01 bis 1 g ($P_A$) pro Liter Flotte, besonders bevorzugt 0,03 bis 0,6 g ($P_A$) pro liter Flotte entsprechen.

Da die erfindungsgemäßen Naßgleitmittel, d.h. Polyamide ($P_A$) bzw. Dispersionen (W), sich auch durch ihre große Unabhängigkeit von Temperaturschwankungen auszeichnen und weitgehend elektrolytbeständig sind, können sie auch in einer sehr weiten Auswahl von Behandlungsbedingungen, wie sie für die Behandlung mit Textilchemikalien (T) in der Technik vorkommen, insbesondere zur Vorbehandlung mit ($T_1$), zum Färben oder optischen Aufhellen mit ($T_2$) und zum Nachbehandeln mit ($T_3$) eingesetzt werden, z.B. mit ($T_1$) beim Entschlichten oder bei einer sonstigen Reinigung oder beim Bleichen, mit ($T_2$) beim Färben oder optischen Aufhellen oder auch mit ($T_3$) beim Nachbehandeln, vor allem aber beim Färben oder optischen Aufhellen. Für das Färben oder optische Aufhellen können beliebige, für das jeweilige Substrat und Verfahren und für den gewünschten Effekt geeignete Farbstoffe oder optische Aufheller ($T_2$) und gegebenenfalls Färbehilfsmittel ($T_2$) verwendet werden. Für das Färben von polyamidhaltigen Substraten können beliebige entsprechende Farbstoffe, vornehmlich anionische Farbstoffe, z.B. Säurefarbstoffe, Reaktivfarbstoffe, Küpenfarbstoffe und Schwefelfarbstoffe, darunter vor allem die sogenannten "neutralziehenden" Säurefarbstoffe, und gegebenenfalls Färbehilfsmittel (z.B. Netzmittel oder/und Egalisiermittel) eingesetzt werden, wobei für das Färben von Substraten aus Fasergemischen, insbesondere aus Cellulosefasern und Synthesefasern, auch entsprechende geeignete Farbstoffe verwendet werden können, insbesondere Reaktivfarbstoffe, Direktfarbstoffe, Küpenfarbstoffe oder Schwefelfarbstoffe (sowie gegebenenfalls auch entsprechende Färbehilfsmittel). Die Verfahren können beliebige Temperaturbereiche durchlaufen, wie sie für das jeweilige Substrat und das eingesetzte Behandlungsmittel, sowie durch die Apparatur und den gewünschten Zweck bedingt, zum Einsatz kommen, z.B. von Raumtemperatur (z.B. bei Färbebeginn) bis $\leq$ 100°C (z.B. bei 80 bis 98°C) oder auch höher z.B. unter HT (Hoch Temperatur)-Bedingungen z. B. bis 140°C (z.B. im Bereich von 102 bis 140°C, in der geschlossenen Apparatur), vornehmlich im Temperaturbereich von 80 bis 120°C. Auch der Elektrolytgehalt der Flotten kann beliebig sein, wie er sonst für die jeweiligen Verfahren üblicherweise zum Einsatz kommt, z.B. entsprechend den Alkalimetallsalz- (z.B. Kochsalz- oder Natriumsulfat-)-konzentrationen oder/und Säure- oder Alkalimetallhydroxyd- oder -carbonatkonzentrationen, wie sie beim Färben mit den genannten Farbstoffen zum Einsatz kommen.

Die pH-Werte können beliebig sein, wie sie für die jeweiligen Substrate, Farbstoffe und Applikationsverfahren geeignet sind. Für Polyamidfärbungen mit Säurefarbstoffen liegen geeignete pH-Werte z.B. im sauren bis schwach basischen Bereich (z.B. im pH-Bereich von 3 bis 9, vorteilhaft 3,5 bis 8, vorzugsweise 4,5 bis 7).

Vorteilhaft werden die Polyamide ($P_A$) bzw. Dispersionen (W) als Naßgleitmittel beim Färben oder optischen Aufhellen eingesetzt, besonders in Düsenfärbeapparaten (sowohl solchen mit hydrodynamischer Flottenführung als auch solchen mit aerodynamischer Flottenführung), vorzugsweise für das Färben von polyamidhaltigen Substraten, besonders bevorzugt von solchen die im wesentlichen nur aus Polyamidfasern (besonders auch Mikrofasern) bestehen.

Für die Verwendung bei der Behandlung von Polyamidfasern sind unter den Poly- bzw. Oligoamiden ($P_A$)

besonders solche Polyamide bzw. Oligoamide ($P_A'''$) bevorzugt, worin der hydrophobe Teil aus solchen Ausgangsverbindungen ($A_1$) und ($B_1$) stammt bzw. Monomereinheiten aufgebaut ist, welche unmittelbar homolog von (besonders ± 1 bis 2 Kohlenstoffatomen) oder vorzugsweise identisch mit denjenigen sind, aus welchen das zu behandelnde Faserpolymere stammt bzw. aufgebaut ist. Wenn also z.B. das zu behandelnde Polyamidsubstrat ein Polyamid aus Adipinsäure und Hexamethylendiamin (d.h. ein Nylon 6,6) ist, besteht der hydrophobe Teil von ($P_A$) bzw. ($P_A'''$) vorzugsweise im wesentlichen aus Amideinheiten aus Adipinsäure und Hexamethylendiamin, während der hydrophile Teil dann im wesentlichen vorzugsweise aus ($A_2$), insbesondere einem aminopropylierten Polyäthylen/propylenglykol vom Typus "Jeffamin", besteht.

Durch die große Beständigkeit gegen Temperaturschwankungen auch bei relativ hohen Temperaturen, können die erfindungsgemäßen Naßgleitmittel, d.h. Polyamide ($P_A$) bzw. Dispersionen (W), unter den genannten Bedingungen eingesetzt werden und optimal zur Geltung kommen, ohne daß deren Wirkung beeinträchtigt wird. Durch die große Scherkraftstabilität der Naßgleitmittel (W), besonders derjenigen, die nur aus ($P_A$) und (G) und gegebenenfalls (F), (X), (Y) und/oder (Z), in wäßriger Dispersion oder kolloidaler Lösung bestehen, sind diese besonders auch als Naßgleitmittel in Düsenfärbeapparaten geeignet, vor allem auch in solchen, worin die Ware bzw. die Flotte extrem hohen dynamischen Beanspruchungen ausgesetzt sind, beziehungsweise worin in der Flotte sehr hohe Scherkräfte zur Entfaltung kommen.

Die Dispersionen (W) bzw. die Polyamide (oder Oligoamide) ($P_A$) [insbesondere ($P_A'$) oder ($P_A''$) oder auch ($P_A'''$)] weisen auch in sehr kurzen Flotten, z.B. bei Flotte/Ware-Verhältnissen $\leq$ 15/1, besonders auch $\leq$ 10/1, eine sehr gute, äußerst oberflächliche Naßgleitwirkung auf - besonders die (G)-haltigen -, insbesondere insoweit, als sie bewirken, daß das Gleitmittel sich an der Warenoberfläche anreichert und die Flotte sich in der unmittelbaren Umgebung des Gleitmittels anreichert und als fließende Flottenschicht das nasse Gleiten der Ware in überraschend hohem Grade erleichtert.

Durch Einsatz der erfindungsgemäßen Naßgleitmittel ($P_A$), besonders in Form ihrer wäßrigen Präparate (W), können, auch bei Verwendung sehr kurzer Flotten, insbesondere optimal gefärbte oder/und optisch aufgehellte Materialien erhalten werden, in welchen die Wirkung des jeweiligen Behandlungsmittels (Vorbehandlungsmittels, Farbstoffes, optischen Aufhellers bzw. Nachbehandlungsmittels) nicht beeinträchtigt ist und ein optimales Warenbild erhalten wird, auch wenn während des Verfahrens die Flotte praktisch vollständig auf der Ware ist und praktisch keine Flotte mehr im Apparateboden übrig geblieben ist.

Die Wirksamkeit der Polyamide ($P_A$) und der Präparate (W) als Naßgleitmittel kann durch Messung des Reibungskoeffizienten z.B. wie folgt ermittelt werden: Ein erstes Stück Stoff wird an den Innenboden einer niedrigen, flachen Wanne anliegend gespannt, mit einer Klemme an einem Ende befestigt und mit einer Menge Flotte bedeckt, die den praxisüblichen Flottenverhältnissen entspricht; darauf wird ein 200 g Gewicht mit glattem, flachem, rechteckigem Boden, auf welchen ein zweites Stück des gleichen Stoffes gespannt und befestigt ist, waagrecht aufgelegt. Nun wird das aufgelegte, mit dem zweiten Stück Stoff bespannte Gewicht (= "Schlitten") in die Längsrichtung der Wanne und des ersten gespannten Stoffstückes (= "Bahn") gezogen, bis es sich in Bewegung setzt und bis es eine konstante Geschwindigkeit erreicht, und es wird die Zugkraft ermittelt, die benötigt wird, um den "Schlitten" auf der "Bahn", von dem mit der Klemme fixierten Ende ausgehend, waagrecht in Bewegung zu setzen und sich waagrecht in die Zugrichtung bei konstanter Geschwindigkeit zu bewegen. Dadurch können sowohl die statische Reibung als auch die kinetische Reibung und somit sowohl der statische Reibungskoeffizient als auch der kinetische Reibungskoeffizient ermittelt werden.

Bezeichnet man mit $N_0$ die normale Kraft (d.h. das Gewicht des "Schlittens" auf der "Bahn"), mit $Z_S$ die waagrechte Zugkraft die erforderlich ist, um den "Schlitten" auf der "Bahn" in Bewegung zu setzen, und mit $Z_K$ die waagrechte Zugkraft, die erforderlich ist, um den "Schlitten" bei konstanter Geschwindigkeit auf der "Bahn" in Bewegung zu halten, so kann der statische Reibungskoeffizient $\mu_S$ durch die folgende Formel

$$\mu_s = \frac{Z_S}{N_0}$$

und der kinetische Reibungskoeffizient $\mu_K$ durch die folgende Formel

$$\mu_K = \frac{Z_K}{N_0}$$

ausgedrückt werden.

Durch den Einsatz von ($P_A$) können nicht nur $\mu_K$ sondern auch $\mu_S$ auf sehr niedrige Werte gebracht werden.

Die Gesamtwirksamkeit der Naßgleitmittel kann visuell durch Überprüfung der entsprechend behandelten

Ware zur Ermittlung von Scheuerstellen oder Lauffaltenmarkierungen (z.B. an einer Färbung) festgestellt werden.

In den folgenden Beispielen bedeuten die Teile Gewichtsteile und die Prozente Gewichtsprozente; die Temperaturen sind in Celsiusgraden angegeben. Die in den Beispielen (Herstellungs-, Dispersions- und Applikationsbeispielen) zusätzlich zu den Oligoamiden zugegebenen Produkte sind handelsübliche Produkte. In den Applikationsbeispielen werden die Farbstoffe in handelsüblicher Form mit einem Reinfarbstoffgehalt von ca. 25 % eingesetzt, die angegebenen Konzentrationen beziehen sich auf diese Form und sind auf das Substratgewicht bezogen. C.I. steht für Colour Index. Die in den folgenden Beispielen eingesetzten O,O'-Bis-(2-aminopropyl)-polyalkylenglykole ($A_{21}$) und ($A_{22}$), Polyacrylamide ($G_1$) und ($G_2$) und Biozid ($Z_{11}$) sind die folgenden

O,O'-Bis-(2-aminopropyl)-polyalkylenglykole ($A_{21}$) und ($A_{22}$):

O,O'-Bis-(2-aminopropyl)-polyalkylenglykole der durchscnittlichen Formel

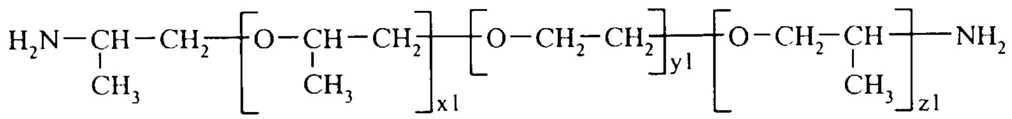

(Ia'),

worin

in ($A_{21}$)

$$\frac{x1 + z1}{y1} = \frac{3,5}{15,5}$$

Molekulargewicht $\overline{M}_W = 900$

in ($A_{22}$)

$$\frac{x1 + z1}{y1} = \frac{5,5}{37,5}$$

Molekulargewicht $\overline{M}_W = 2150$

| | |
|---|---|
| Polyacrylamid ($G_1$): | Acrylamid/Natriumacrylat-Copolymerisat mit durchschnittlichem Molekulargewicht $\overline{M}_W$ von $2.10^7$ und 27 ± 3 Mol-% $CH_2CHCOONa$ Monomereinheiten |
| Polyacrylamid ($G_2$): | Polyacrylamid Homopolymer mit durchschnittlichem Molekulargewicht $\overline{M}_W$ von $2 \cdot 10^6$ |
| Biozid ($Z_{11}$): | 1,5 %-ige wäßrige Lösung von 2-Methyl-4-isothiazolin-3-on, die noch 1,75 % $Mg(NO_3)_2$, 0,85 % $MgCl_2$ und 0,12 % $CU(NO_3)_2$ enthält. |

Beispiel 1

a) Dispersion ($W_1$)

161,4 Teile O,O'-Bis-(2-aminopropyl)-polyalkylenglykol ($A_{21}$) und 44,8 Teile Adipinsäure werden unter Rühren und unter Stickstoff auf 180°C aufgeheizt. Sobald diese Temperatur erreicht ist, werden 14,8 Teile geschmolzenes Hexamethylendiamin von 50°C zugetropft und die Temperatur wird weiterhin bei 180°C gehalten, bis die Säurezahl des Reaktionsgemisches < 10 ist. Dabei werden ca. 11 Teile Wasser abdestilliert. Sodann wird mit dem Kühlen begonnen und es werden gleichzeitig 63 Teile Glycerin zugefügt. Bei 140°C wird mit der Zugabe von 1123,4 Teilen Wasser begonnen, wobei durch die Zugabe der ersten 150 Teile die Temperatur von 140°C auf 100°C erniedrigt wird und nach der gesamten Wasserzugabe die Innentemperatur 30°C beträgt. Sodann werden noch 1,4 Teile Biozid ($Z_{11}$) zugefügt und der pH-Wert wird mit ca. 2,2 Teilen 30 %-iger Natronlauge auf 7,0 ± 0,2 eingestellt. Es werden 1400 Teile Dispersion ($W_1$) erhalten.

b) Dispersion ($W_{G1}$)

2782,8 Teile Wasser werden vorgelegt und mit 4,6 Teilen Copolymerisat ($G_1$) versetzt. Sobald eine homogene Lösung vorliegt, fügt man der Polyacrylamid-Lösung 1400 Teile der Dispersion ($W_1$) zu. Sodann werden noch 4,2 Teile Biozid ($Z_{11}$) zugegeben. Man erhält 4191,6 Teile der Dispersion ($W_{G1}$).

Beispiel 2

Es wird so verfahren wie im Beispiel 1 beschrieben, wobei im Teil b), nach der Zugabe der Dispersion ($W_1$), dem Copolymerisat ($G_1$) eine wäßrige Formaldehydlösung im Gewichtsverhältnis von 1 Teil 37 %-iger Formaldehydlösung pro 1000 Teile Dispersion ($W_{G1}$) zugegeben wird und bei Raumtemperatur zur Bildung von Methylolgruppen mit dem Copolymerisat umgesetzt wird. Dadurch wird die Dispersion ($W_{G2}$) erhalten.

Beispiel 3

Es wird so vorgegangen wie im Beispiel 1 beschrieben, wobei die folgenden Produkte für die jeweiligen Dispersionen ($W_3$) und ($W_{G3}$) eingesetzt werden:

a) Dispersion ($W_3$)

| | | |
|---|---|---|
| 190,3 | Teile O,O'-Bis-(2-aminopropyl)-polyalkylenglykol ($A_{22}$) | |
| 19,4 | Teile Adipinsäure | |
| 5,1 | Teile Hexamethylendiamin | |
| 63 | Teile Glycerin | |
| 1125,6 | Teile Wasser | |
| 1,4 | Teile Biozid ($Z_{11}$) | (Destillat: 4,7 Teile) |

b) Dispersion ($W_{G3}$)

| | |
|---|---|
| 2782,8 | Teile Wasser |
| 4,6 | Teile Copolymer ($G_1$) |
| 1400 | Teile Dispersion ($W_3$) |
| 4,2 | Teile Biozid ($Z_{11}$) |

Beispiel 4

a) Polyamid ($P_{A1}$)

175,2 Teile O,O'-Bis-(2-aminopropyl)-polyalkylenglykol ($A_{22}$) und 28,6 Teile Adipinsäure werden unter Rühren und unter Stickstoff auf 150°C aufgeheizt. Wenn diese Temperatur erreicht ist, werden 13,3 Teile geschmolzenes Hexamethylendiamin von 50°C zugetropft und das Gemisch wird während 15 Stunden bei 150°C reagieren gelassen, wobei die Säurezahl des Reaktionsgemisches einen Wert von ≤ 10 erreicht und 7,1 Teile Wasser als Destillat anfallen. Anschließend wird das geschmolzene Polyamid ausgeladen und erstarren gelassen. Man erhält 210 Teile Polyamid ($P_{A1}$)

b) Dispersion ($W_4$)

1190 Teile Wasser und 210 Teile Polyamid ($P_{A1}$) werden unter Rühren auf 80°C erhitzt und solange weitergerührt, bis eine gleichmäßige Dispersion vorliegt, die dann auf Raumtemperatur abgekühlt wird. Man erhält 1400 Teile Dispersion ($W_4$).

Beispiel 5

Dispersionen ($W_5$) und ($W_{G5}$)

Es wird so vorgegangen wie im Beispiel 1 Dispersionen ($W_1$) und ($W_{G1}$) beschrieben, mit dem Unterschied, daß anstelle von Glycerin die gleiche Menge 1,2-Propylenglykol eingesetzt wird.

Beispiel 6

Dispersion ($W_{G6}$)

Es wird so vorgegangen, wie im Beispiel 1 beschrieben, mit dem Unterschied, daß zur Herstellung der Dispersion ($W_{G6}$) im Teil b) folgendermaßen verfahren wird:
783,6 Teile einer 30 %-igen wäßrigen Lösung des Polyacrylamids ($G_2$) werden mit 2007 Teilen Wasser verdünnt. Anschließend werden 3 Teile Acrylamid/Natriumacrylat-Copolymerisat ($G_1$) zugegeben. Sobald eine homogene Lösung vorliegt, werden noch 3 Teile einer 37 %-igen wäßrigen Formaldehydlösung und anschließend 1400 Teile Dispersion ($W_1$) zugegeben. Man erhält 4196,6 Teile Dispersion ($W_{G6}$).

Applikationsbeispiel A [Färben von Polyamid-Strickware im Jet (Laborjet Mathis)]

Ein Stück Polyamid-Strickware wird auf dem Mathis Laborjet wie folgt gefärbt: Im Jet der 900 Teile wäßrige Flotte und 1 Teil Dispersion ($W_{G1}$) enthält, werden 90 Teile Polyamid-Strickware eingetragen. Man fügt der Flotte 0,23 Teil C.I. Acid Yellow 256, 0,20 Teil C.I. Acid Red 57, 0,41 Teil C.I. Acid Blue 72, 1 Teil eines kationischen Egalisiermittels (Alkylaminethoxylat), 1 Teil Essigsäure (pH der Flotte 5,0) zu und heizt die Flotte bei einer Geschwindigkeit von 1°C/min von Raumtemperatur auf 98°C auf und färbt 30 Minuten bei 98°C weiter. Dann wird wieder abgekühlt und zweimal mit Wasser gespült. Dann wird die Flotte abgelassen, die Ware ausgeladen und an der freien Luft bei Raumtemperatur getrocknet. Man erhält eine anthrazit-graue, gleichmäßig gefärbte Ware mit sehr schönem Warenbild.

Applikationsbeispiel B [Färben von Polyamid-Mikrofaser-Gewebe auf dem Jet (Laborjet Mathis)]

Ein Stück Polyamid-Mikrofaser-Gewebe wird auf dem Mathis Laborjet wie folgt gefärbt: Im Jet der 900 Teile wäßrige Flotte und 2 Teile Dispersion ($W_{G1}$) enthält, werden 90 Teile Polyamid-Mikrofaser-Gewebe eingetragen. Man fügt der Flotte 0,41 Teil C.I. Acid Orange 67, 0,47 Teil C.I. Acid Red 336, 0,47 Teil C.I. Acid Blue 350, 1 Teil eines kationischen Egalisiermittels (Alkylaminethoxylat) und 1 Teil eines Säurespenders (Sandacid VS fl.) zu. Der pH-Wert der Flotte wird mit Soda kalz. auf 8,5 eingestellt und dann heizt man die Flotte bei einer Geschwindigkeit von 1°C/min von Raumtemperatur auf 98°C auf und färbt 30 Minuten bei 98°C weiter. Dann wird wieder abgekühlt und zweimal mit Wasser gespült. Dann wird die Flotte abgelassen, die Ware ausgeladen und an der freien Luft bei Raumtemperatur getrocknet. Man erhält eine braune, gleichmäßig gefärbte Ware mit weichem Griff und mit einem sehr schönen Warenbild.

Applikationsbeispiel C [Färben von Polyamid-Mikrofaser/Elastan-Mischgewebe im Jet (Laborjet Mathis)]

In 900 Teile einer auf 40°C erwärmten wäßrigen Flotte, die 2 Teile Dispersion ($W_{G1}$) enthält, werden 100 Teile Polyamid-Mikrofaser/Elastan-Mischgewebe 93/7 eingetragen. Man fügt dem Bad eine Lösung von 7,0 Teile C.I. Acid Black 194, 1 Teil eines Säurespenders (Sandacid VS fl.) und stellt den pH der Flotte auf 8,0 mit Soda kalz. ein. Es wird dann bei einer Geschwindigkeit von 1,5°C/min von 40°C auf 98°C aufgeheizt. Die Färbung wird noch weitere 45 Minuten bei 98°C durchgeführt und dann wird das Bad bei einer Geschwindigkeit von 2°C/min auf 60°C abgekühlt. Nach Fertigstellung auf übliche Weise (Spülen, Trocknen) erhält man eine sehr egale Schwarzfärbung mit einem perfekten Warenbild.

Auf analoge Weise wie die Dispersion ($W_{G1}$) werden in den Applikationsbeispielen A, B und C eine jede der Dispersionen ($W_{G2}$), ($W_{G3}$), ($W_{G5}$), ($W_{G6}$), ($W_1$), ($W_2$), ($W_3$), ($W_4$) und ($W_5$) eingesetzt.

**Patentansprüche**

**1.** Verwendung von
($P_A$) in Wasser dispergierbaren oder kolloidal löslichen Polyamiden, die hydrophile Polyalkylenglykolätherketten im Grundgerüst enthalten,
als Naßgleitmittel beim Behandeln von textiler Stückware in Strang- oder Schlauchform mit einem Textilbehandlungsmittel (T) aus wäßriger Flotte unter solchen Bedingungen, die sonst im textilen Substrat die Bildung von Lauffalten und/oder das Auftreten von Reibungen im oder am Substrat begünstigen würden.

**2.** Verwendung nach Anspruch 1, dadurch gekennzeichnet, daß ($P_A$) ein Polyamid aus difunktionellen Verbindungen (D), und gegebenenfalls monofunktionellen Verbindungen (E), die zum Endverschluß der Polyamide geeignet sind, und/oder höhere oligofunktionelle Verbindungen (H) die zur Verzweigung der Polyamide geeignet sind, ist,

**3.** Verwendung nach Anspruch 2, dadurch gekennzeichnet, daß als difunktionelle Verbindungen (D)

($A_1$) aliphatische, araliphatische oder aromatische Diamine die sonst keine hydrophilen Komponenten oder Substituenten enthalten,
($A_2$) aliphatische Diamine, die mindestens eine hydrophile Polyäthylenglykolkette enthalten,
und
($B_1$) Alkandicarbonsäuren mit 2 bis 36 Kohlenstoffatomen, aromatische Dicarbonsäuren mit einem bis drei Benzolringen, wovon zwei gegebenenfalls kondensiert sein können, oder araliphatische Dicarbonsäuren, die 9 bis 18 Kohlenstoffatome enthalten und dabei einen Benzolring oder zwei gegebenenfalls kondensierte Benzolringe enthalten, wobei aromatische Ringe gegebenenfalls über Sauerstoff an weitere aliphatische, aromatische oder araliphatische Teile des Moleküls gebunden sein können,

eingesetzt werden.

**4.** Verwendung nach Anspruch 3, dadurch gekennzeichnet, daß ($P_A$) ein Polyamid aus

($A_1$) einem aliphatischen Diamin das sonst keine hydrophilen Komponenten oder Substituenten enthält,
($A_2$) einem Aminoalkylierungsprodukte von Polyäthylenglykolen mit einem durchschnittlichen Molekulargewicht $\overline{M}_W$ im Bereich von 200 bis 4000 oder von Copolyalkylenglykolen, die vorwiegend aus Äthylenoxyeinheiten und für den restlichen Teil aus Butylenoxy und/oder Propylenoxyeinheiten bestehen, mit einem durchschnittlichen Molekulargewicht $\overline{M}_W$ im Bereich von 300 bis 5000,
und
($B_1$) einer Alkandicarbonsäure mit 2 bis 36 Kohlenstoffatomen,

ist.

**5.** Verwendung nach einem der Ansprüche 1 bis 4, dadurch gekennzeichnet, daß ($P_A$) in Form von wäßrigem, konzentriertem Präparat (W) eingesetzt wird.

**6.** Verwendung nach Anspruch 5, dadurch gekennzeichnet, daß (W) eine wäßrige Dispersion oder kolloidale Lösung ist, die durch einen Gehalt an ($P_A$) und

(F) einem Fließhilfsmittel
und/oder
(G) einem Verdickungsmittel,

gekennzeichnet ist.

**7.** Verwendung nach Anspruch 6, dadurch gekennzeichnet, daß (W), zusätzlich zu ($P_A$), (F) und/oder (G), mindestens eine der folgenden Komponenten

(X) einen nicht-ionogenen Emulgator oder ein Gemisch aus nicht-ionogenen Emulgatoren oder ein Gemisch aus nicht-ionogenen Emulgatoren und anionischen oder amphoteren Emulgatoren oder ein Gemisch aus nicht-ionogenen Emulgatoren, anionischen Emulgatoren und amphoteren Emulgatoren,
(Y) mindestens ein Mittel zur pH-Einstellung
und
(Z) mindestens einen Formulierungszusatz

enthält.

**8.** Verwendung nach einem der Ansprüche 1 bis 7, dadurch gekennzeichnet, daß (T) mindestens ein Farbstoff oder mindestens ein optischer Aufheller ist.

**9.** Verwendung nach einem der Ansprüche 1 bis 8, beim Färben oder optischen Aufhellen von Textilmaterial aus Polyamidfasern, gegebenenfalls im Gemisch mit anderen Fasern, in Düsenfärbeapparaten.

**10.** Verwendung nach einem der Ansprüche 1 bis 9, beim Färben oder optischen Aufhellen von Textilmaterial aus Polyamidmikrofasern, gegebenenfalls im Gemisch mit anderen Fasern vergleichbarer Feinheit.

**11.** Naßgleitmittel für das Färben oder optische Aufhellen von textiler Stückware in Strang- oder Schlauchform aus wäßriger Flotte unter solchen Bedingungen, die sonst im textilen Substrat die Bildung von Lauffalten oder das Auftreten von Reibungen im oder am Substrat begünstigen würden, gekennzeichnet durch einen Gehalt an einem in Wasser dispergierbaren oder kolloidal löslichen Polyamid ($P_A$), das wie in einem der Ansprüche 1 bis 4 definiert ist.

**12.** Wäßriges Naßgleitmittel, welches eine wäßrige Dispersion oder kolloidale Lösung (W) ist, die wie in einem der Ansprüche 5 bis 7 definiert ist.

**13.** Naßgleitmittel (W) gemäß Anspruch 12, im wesentlichen bestehend aus ($P_A$), Wasser und mindestens einem der Zusätze (F) und (G) und gegebenenfalls mindestens einem der Zusätze (X), (Y) und (Z).

**14.** Verfahren zum Behandeln von textiler Stückware in Strang- oder Schlauchform mit einem Textilbehandlungsmittel (T) aus wäßriger Flotte, unter solchen Bedingungen, die sonst im textilen Substrat die Bildung von Lauffalten oder das Auftreten von Reibungen im oder am Substrat begünstigen würden, dadurch gekennzeichnet, daß man in Gegenwart eines Naßgleitmittels gemäß einem der Ansprüche 11 bis 13 verfährt.

**15.** Wäßriges Polyamidpräparat (W'), im wesentlichen bestehend aus ($P_A$), (F), (G) und Wasser und gegebenenfalls mindestens einem der Zusätze (X), (Y) und (Z), worin ($P_A$) wie in einem der Ansprüche 1 bis 4 definiert ist, (F) und (G) wie im Anspruch 6 definiert sind, und (X), (Y) und (Z) wie im Anspruch 7 definiert sind.

**16.** Polyamid ($P_A$) das wie im Anspruch 3 oder 4 definiert ist.

**17.** Verfahren zur Herstellung von Polyamiden ($P_A$) gemäß Anspruch 16, dadurch gekennzeichnet, daß man ($A_2$) mit ($B_1$) zu einem Vorpolymer umsetzt und dieses mit ($A_1$) umsetzt.

**18.** Verfahren zur Herstellung der wäßrigen Präparate oder Naßgleitmittel (W) gemäß einem der Ansprüche 11 bis 15, dadurch gekennzeichnet, daß man ($P_A$), gegebenenfalls im Gemisch mit (F) und/oder (X), mit Wasser und gegebenenfalls mit (Z) und gegebenenfalls mit einer wäßrigen Lösung oder Dispersion von (G) und gegebenenfalls mit wäßrigem (X) und/oder (Y) und/oder (Z) mischt.

**19.** Verfahren nach Anspruch 18, dadurch gekennzeichnet, daß man eine wäßrige Lösung oder Dispersion eines Verdickungsmittels (G) einsetzt, welches ein Polyacrylamid und/oder ein Acrylamid/Acrylsäure-Copolymeres gegebenenfalls in Salzform ist, das mit Formaldehyd mindestens teilweise methyloliert ist.

Europäisches Patentamt

# EUROPÄISCHER RECHERCHENBERICHT

Nummer der Anmeldung
EP 99 81 0847

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 1 146 675 A (IMPERIAL CHEMICAL INDUSTRIES LIMITED) 26. März 1969 (1969-03-26) * Seite 1, Zeile 1 - Seite 5, Zeile 128; Ansprüche; Beispiele * | 1-6,8,9, 11-19 | D06M15/59 D06M15/53 C08G69/40 |
| X | GB 1 108 811 A (IMPERIAL CHEMICAL INDUSTRIES LIMITED) 3. April 1968 (1968-04-03) * Seite 1, Zeile 1 - Seite 8, Zeile 104; Ansprüche * | 1-6,8,9, 11-19 | |
| X | GB 1 108 812 A (IMPERIAL CHEMICAL INDUSTRIES LIMITED) 3. April 1968 (1968-04-03) * Seite 1, Zeile 1 - Seite 4, Zeile 79; Ansprüche * | 1-6,8,9, 11-19 | |
| X | DE 15 95 669 A (HOECHST AG) 30. Juli 1970 (1970-07-30) * Seite 9, Zeile 1 - Zeile 7; Ansprüche * | 11 | **RECHERCHIERTE SACHGEBIETE (Int.Cl.7)** |
| X | US 3 882 090 A (FAGERBURG DAVID R ET AL) 6. Mai 1975 (1975-05-06) * Spalte 1, Zeile 17 - Zeile 32 * * Spalte 2, Zeile 38 - Zeile 50 * * Spalte 6, Zeile 30 - Zeile 39 * * Ansprüche * | 11,12 | D06M C08G |

Der vorliegende Recherchenbericht wurde für alle Patentansprüche erstellt

| Recherchenort | Abschlußdatum der Recherche | Prüfer |
|---|---|---|
| MÜNCHEN | 28. Februar 2000 | Koegler-Hoffmann, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 99 81 0847

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-02-2000

| Im Recherchenbericht angeführtes Patentdokument | Datum der Veröffentlichung | Mitglied(er) der Patentfamilie | Datum der Veröffentlichung |
|---|---|---|---|
| GB 1146675 A | | KEINE | |
| GB 1108811 A | | BE 663840 A | 12-11-1965 |
| | | DE 1249521 B | |
| | | FR 1464597 A | 16-03-1967 |
| | | NL 6506021 A | 15-11-1965 |
| | | BE 663841 A | 01-09-1965 |
| | | DE 1570790 A | 29-01-1970 |
| | | FR 1542431 A | |
| | | GB 1108812 A | |
| | | NL 6505938 A | 15-11-1965 |
| | | SE 331192 B | 14-12-1970 |
| GB 1108812 A | | BE 663841 A | 01-09-1965 |
| | | DE 1570790 A | 29-01-1970 |
| | | FR 1542431 A | |
| | | NL 6505938 A | 15-11-1965 |
| | | BE 663840 A | 12-11-1965 |
| | | DE 1249521 B | |
| | | FR 1464597 A | 16-03-1967 |
| | | GB 1108811 A | |
| | | NL 6506021 A | 15-11-1965 |
| | | SE 331192 B | 14-12-1970 |
| DE 1595669 A | 30-07-1970 | BE 702824 A | 19-02-1968 |
| | | FR 1534413 A | |
| | | GB 1170300 A | 12-11-1969 |
| | | NL 6711338 A | 19-02-1968 |
| US 3882090 A | 06-05-1975 | DE 2426978 A | 19-12-1974 |
| | | GB 1463106 A | 02-02-1977 |
| | | JP 50157496 A | 19-12-1975 |

EPO FORM P0461

Für nähere Einzelheiten zu diesem Anhang : siehe Amtsblatt des Europäischen Patentamts, Nr.12/82